# EUROPEAN PATENT SPECIFICATION

(11) **EP 1 487 125 B1**
(45) Date of publication and mention of the grant of the patent: **31.05.2006**
(21) Application number: 04019492.0
(22) Date of filing: 29.09.1999
(51) Int. Cl.: H04B 1/40, H04B 1/38

(54) **Transmitter/receiver apparatus with an antenna for use of both signal transmission and reception**
Sendeempfänger mit eine gemeinsame Antenne für Sendung und empfang
Emetteur-récepteur avec une antenne utilisée à la fois pour émission et réception de signaux

(30) Priority: 01.10.1998 JP 27951998
(43) Date of publication of application: 15.12.2004
(62) Divisional of application: 99119042.2
(73) Proprietor: MATSUSHITA ELECTRIC INDUSTRIAL CO., LTD., Kadoma-shi, Osaka-fu (JP)
(72) Inventor: Yamasaki, Hidetoshi, Amagasaki-shi Hyogo-ken (JP); Takai, Hitoshi, Toyono-gun Osaka-fu (JP); Urabe, Yoshio, Ikoma-gun, Nara-ken 636-0938 (JP); Mori, Kenichi, Ibaraki-shi Osaka-fu 567-0833 (JP)
(74) Representative: Lang, Johannes

(56) References cited:
- EP-A- 0 630 118
- GB-A- 2 322 772
- US-A- 5 737 687
- PATENT ABSTRACTS OF JAPAN vol. 015, no. 277 (E-1089), 15 July 1991 (1991-07-15) & JP 03 094524 A (MITSUBISHI ELECTRIC CORP), 19 April 1991 (1991-04-19)

## Description

### BACKGROUND OF THE INVENTION

### Field of the Invention

The present invention relates to transmitter/receiver apparatuses with an antenna for use of both signal transmission and reception, more particularly to a transmitter/receiver apparatus with an antenna for use of both signal transmission and reception of a type extending a radio coverage under EIRP, while keeping a predetermined quality for communications.

### Description of the Background Art

In a radio communication system such as low-power data communication system constituting a rapidly-developing local area radio network such as wireless LAN, the maximum transmitting signal power thereof is restricted in advance by Equivalent Isotropically Radiated Power (EIRP), for example, to prevent radio interference to neighboring systems. In Japan, for example, in the low-power data communication system where a band of 2.4GHz is used, the output of the transceiver is regulated to be equal to or smaller than a value, per 1MHz, obtained by deducting power equivalent to a dipole gain of a transmitting antenna to be connected to the transceiver from 10mW. Conventionally, a higher-gain antenna has been used to extend a distance between a transmitting station and a receiving station (hereinafter, referred to as radio coverage) while keeping a predetermined quality for communications.

A transmitter/receiver apparatus of a type extending the radio coverage by using the higher-gain antenna under the regulated EIRP, for example, is disclosed in Japanese Patent Laying-Open No. 7-154314.

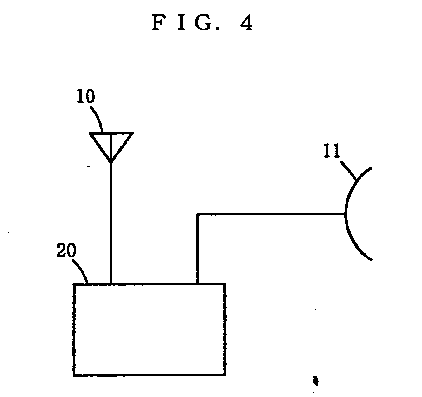

FIG. 4 shows the transmitter/receiver apparatus disclosed in Japanese Patent Laying-Open No. 7-154314 by way of conventional example. The conventional transmitter/receiver apparatus is provided with a nondirectional transmitting antenna 10, a high-gain receiving antenna 11, and a transceiver 20. The nondirectional transmitting antenna 10 is an antenna provided with such constant gain that satisfies the aforementioned EIRP. In order to assure a radio coverage desired by a user, only the high-gain receiving antenna 11 is changed into an antenna whose gain is enough for the purpose. In this manner, the conventional transmitter/receiver apparatus can extend the radio coverage without changing the design of the transceiver.

As is known from the above, the conventional transmitter/receiver apparatus is provided with two antennas separately for signal transmission and reception. Thus, when the radio coverage is required to be extended under the regulated EIRP, only the antenna for signal reception is changed into an antenna having a higher gain.

A transmitter/receiver apparatus with a single transmitting/receiving antenna for use of both signal transmission and reception to which an RF input-output terminal is connected is a popular type for a rapidly-growing mobile communication system. For such transmitter/receiver apparatus, however, an attempt to extend the radio coverage by increasing a gain of the antenna under the regulated EIRP always necessitates a design change of the transceiver, which involves great cost and long development period. This is because, any increase in the gain of the antenna for the transmitter/receiver apparatus causes the gain of the antenna to increase both during signal transmission and reception. Accordingly, in order to satisfy the regulated EIRP, for example, power of the transmitting signal to be provided to the antenna is required to be attenuated as much as the increase in gain of the antenna. Therefore, the design of a transmission part in the transceiver has to be changed so as to attenuate the power of the transmitting signal to be outputted from the RF input-output terminal of the transceiver. If attenuation of the power of the transmitting signal to be provided to the antenna is an only purpose, there is no need to change the design of the transceiver. In this case, the power can be attenuated to a predetermined level only by interposing an attenuator between the antenna and the RF input-output terminal of the transceiver. However, if the attenuator has an attenuation matching the increased gain of the antenna, and is interposed between the transmitting/receiving antenna and the RF input-output terminal of the transceiver on the transmission path, the attenuator attenuates received signals as well. As a result, sensitivity to signal reception at a feeding terminal of the antenna is deteriorated as much as the increase in the gain of the antenna. Therefore, the radio coverage is not extended even if the transmitting/receiving antenna is changed into the higher-gain antenna. In order to extend the radio coverage with the antenna whose gain is higher than the transmitting/receiving antenna initially-planned to use with the transceiver in the transmitter/receiver apparatus, there is thus no choice but to change the design of the transceiver, which may involve great cost and long development period, to adjust the level of the transmitting signal to be outputted from the RF input-output terminal of the transceiver.

### SUMMARY OF THE INVENTION

Therefore, an object of the present invention is to provide a transceiver-design-change-no-required transmitter/receiver apparatus with an antenna for use of both signal transmission and reception of a type extending a radio coverage under the regulated EIRP by using an antenna whose gain is higher than the one initially planned to use with the transceiver.

An example which does not form part of the present invention has the following features to attain the object above.

A first aspect of said example is directed to a transmitter/receiver apparatus with an antenna for use of both signal transmission and reception, comprising:
a transceiver producing and outputting a transmitting signal, and receiving and processing a received signal;
an antenna radiating the transmitting signal outputted from the transceiver into the air, and receiving a signal propagating through the air and then outputting the signal as the received signal; and
transmission path forming means for forming a transmission path for having the transmitting signal and the received signal to transmit from/to the transceiver to/from the antenna, wherein
the transmission path forming means comprises:
   a first common transmission path, an end thereof being connected to the transceiver;
   a second common transmission path, an end thereof being connected to the antenna;
   a first transmission path interposed between the other end of the first common transmission path and the other end of the second common transmission path;
   a second transmission path interposed between the other end of the first common transmission path and the other end of the second common transmission path, and provided in parallel with the first transmission path;
   a first circulator placed among the other end of the first common transmission path and the respective other ends of the first and second transmission paths, which outputs the transmitting signal inputted from the first common transmission path to the first transmission path and outputs the received signal inputted from the second transmission path to the first common transmission path;
   a second circulator placed among the other end of the second common transmission path and the respective other ends of the first and second transmission paths, which outputs the received signal inputted from the second common transmission path to the second transmission path and outputs the transmitting signal inputted from the first transmission path to the second common transmission path; and
   an attenuator placed on the first transmission path for attenuating the transmitting signal going therethrough.

As described above, in the first aspect, the attenuator provided on either of two transmission paths attenuates the transmitting signal. In this manner, a level of the transmitting signal to be provided to the antenna can be changed by adjusting the attenuation thereof. Therefore, the transmitter/receiver apparatus with an antenna for use of both signal transmission and reception can change the level of the transmitting signal to be provided to the antenna without affecting sensitivity to signal reception at a feeding terminal of the antenna.

According to a second aspect of said example, in the first aspect, an attenuation in the attenuator is regulated according to a gain of the antenna, whereby an output value of the transmitting signal to be provided to the antenna is settled within a regulated level.

As described above, in the second aspect, even if the output value of the transmitting signal is restricted, a transmitting signal within a regulated level can be provided to the antenna without changing a transmission output level of the transceiver. Therefore, for the transmitter/receiver apparatus with an antenna for use of both signal transmission and reception, there is no need to change the design of the transceiver to extend the radio coverage by using the higher-gain antenna.

According to a third aspect, in the second aspect, the transmission path forming means further comprises:
amplifying means placed on the second transmission path for amplifying the received signal; and
frequency component eliminating means placed on the second transmission path for eliminating undesired frequency components included in the received signal, wherein
a gain of the amplifying means is previously adjusted according to the attenuation in the attenuator, whereby an influence on the transceiver during signal transmission and reception to be caused by the transmitting signal and the received signal reflected off a feeding terminal of the antenna and leaked out of the second circulator can be suppressed.

As described above, in the third aspect, by adjusting the gain of the amplifying means according to the attenuation of the attenuator, the sensitivity to signal reception at the feeding terminal of the antenna is improved as long as the undesirable components of the signals do not adversely affect the transceiver during signal transmission and reception. Accordingly, the radio coverage can be extended to a greater extent.

According to a fourth aspect, in the third aspect, when the transmitting signal and the received signal are different in frequency, the frequency component eliminating means cuts off the transmitting signal reflected off the feeding terminal of the antenna and leaked out of the second circulator not to go through the second transmission path.

As described above, in the fourth aspect, the transmitting signal reflected off the feeding terminal of the antenna and leaked out of the second circulator can be prevented from going around the transmission path forming means. Accordingly, the gain of the amplifying means can be determined as long as the undesirable going-around received signal does not adversely affect the transceiver during signal transmission and reception. What matters at this time is not the level of the transmitting signal but the received signal going around the transmission path forming means. Accordingly, the gain of the amplifying means can be determined more flexibly than the case where signals are transmitted/received under the same frequency.

According to a fifth aspect, in the third aspect, the transmission path forming means further comprises another attenuator to be placed on the first common transmission path, and
the gain of the amplifying means is previously adjusted according to the attenuation in the another attenuator placed on the first common transmission path, whereby the influence on the transceiver during signal transmission and reception to be caused by the transmitting signal and the received signal reflected off the feeding terminal of the antenna and leaked out of the second circulator can be suppressed.

As described above, in the fifth aspect, the gain of the amplifying means can be determined more flexibly than in the transmitter/receiver apparatus with an antenna for use of both signal transmission and reception including only one attenuator. Further, any influence on the transceiver during signal transmission and reception to be caused by the undesirable components of the signals can be suppressed.

According to a sixth aspect, in the fifth aspect, when the transmitting signal and the received signal are different in frequency, the frequency component eliminating means cuts off the transmitting signal reflected off the feeding terminal of the antenna and leaked out of the second circulator not to go through the second transmission path.

As described above, in the sixth aspect, the transmitting signal reflected off the feeding terminal of the antenna and leaked out of the second circulator can be prevented from going around the transmission path forming means. Accordingly, the gain of the amplifying means can be determined as long as the undesirable going-around received signal does not adversely affect the transceiver during signal transmission and reception. What matters at this time is not the level of the transmitting signal but the received signal going around the transmission path forming means. Accordingly, the gain of the amplifying means can be determined more flexibly than the case where signals are transmitted/received under the same frequency.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a block diagram showing the structure of a transmitter/receiver apparatus with an antenna for use of both signal transmission and reception according to a first example
FIG. 2 is a block diagram showing the structure of a transmitter/receiver apparatus with an antenna for use of both signal transmission and reception according to a second example
FIG. 3 is a block diagram showing the structure of a transmitter/receiver apparatus with an antenna for use of both signal transmission and reception according to the present invention.
FIG. 4 is a block diagram exemplarily showing the structure of a conventional transmitter/receiver apparatus.

### DESCRIPTION OF THE PREFERRED EMBODIMENTS

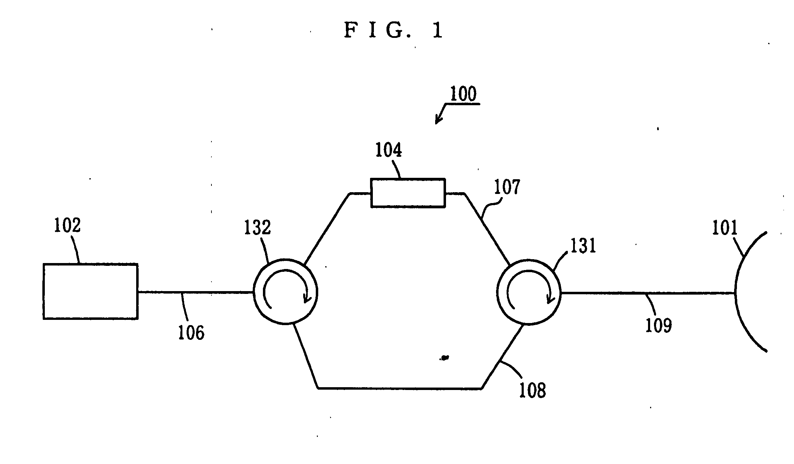

FIG. 1 is a block diagram showing the structure of a transmitter/receiver apparatus with an antenna for use of both signal transmission and reception according to a first example. In FIG. 1, a transmitter/receiver apparatus 100 of this embodiment is provided with a transmitting/receiving antenna 101, a transceiver 102, circulators 131 and 132, and an attenuator 104. The circulator 131 is of a type having three input-output terminals, and the respective terminals are connected to the transmitting/receiving antenna 101, the attenuator 104, and the circulator 132 via a transmitting/received signal path 109 (hereinafter, referred to as common path), a transmitting signal only-path 107, and a received signal only-path 108, respectively. The circulator 132 is also of a type having three input-output terminals, and the respective terminals are connected to the transceiver 102, the attenuator 104, and the circulator 131 via a transmitting/received signal path 106 (hereinafter, referred to as common path), the transmitting signal only-path 107, and the received signal only-path 108, respectively. The attenuator 104 is placed on the transmitting signal only-path 107.

It is first described how the transmitter/receiver apparatus 100 transmits signals by referring to FIG. 1. The transceiver 102 outputs a transmitting signal. The outputted transmitting signal heads for the attenuator 104 first through the common path 106, and then through the transmitting signal only-path 107 via the circulator 132. The transmitting signal reached the attenuator 104 is attenuated in such a manner as to be settled within a regulated level of an output value at the time of output from the transmitting/receiving antenna 101. Thereafter, the transmitting signal goes through the common path 109 via the circulator 131, reaches the transmitting/receiving antenna 101, and is outputted therefrom. A description how the transmitter/receiver apparatus 100 receives signals is as follows. A signal received by the transmitting/receiving antenna 101 having a regulated gain heads for the transceiver 102 first through the common path 109, then through the received signal only-path 108 via the circulator 131, and lastly through the common path 106 via the circulator 132.

The attenuator 104 placed on the transmitting signal only-path 107 is previously provided with an attenuation corresponding to the gain of the transmitting/receiving antenna 101. To extend a distance between a transmitting station and a receiving station while keeping a regulated quality for communications (hereinafter, referred to as radio coverage) under the regulated conditions such as EIRP, it becomes necessary to exchange the transmitting/receiving antenna 101 initially planned to use with the transceiver 102 for the one having a higher gain. Even if so, the level of the transmitting signal can be adjusted by changing the previously-provided attenuation in the attenuator 104 in accordance with the gain of the transmitting/receiving antenna 101. Therefore, there is no need to change the design of the transceiver 102.

The received signal only-path 108 directly connects the circulators 131 and 132 to each other. Accordingly, the received signal going therethrough reaches the transceiver 102 without being attenuated by the attenuator 104. Therefore, the radio coverage can be extended to a greater extent by using the transmitting/receiving antenna 101 having a gain high enough to cover up a transmission loss to be suffered on the way through a passage from the transmitting/receiving antenna 101 to the transceiver 102.

It is now described with specific values to which extent the transmitter/receiver apparatus 100 can extend the radio coverage. In this example, the transmitter/receiver apparatus 100 is presumably used in the radio communication system where the regulated EIRP is greater than or equal to +10dBm and lower than or equal to +20dBm. Also, it is assumed herein that the transceiver 102 is of a type initially designed to go with a nondirectional antenna having a gain of 0dBi and an output of +20dBm; a transmission loss to be suffered in the passage from the transceiver 102 to the transmitting/receiving antenna 101 through the transmitting signal only-path 107 is 2dB (an attenuation in the attenuator 104 is not included) ; a transmission loss from the transmitting/receiving antenna 101 to the transceiver 102 through the received signal only-path 108 is also 2dB; the transmitting/receiving antenna 101 in use is of a directional type having a gain of 22dBi; and the attenuation in the attenuator 104 is 20dB. If this is the case, a transmission output of the transmitter/receiver apparatus 100 is determined, as is the case with the nondirectional antenna, by EIRP of 20dBm, and the gain of the antenna minus the transmission loss in the passage through the received signal only-path 108 is 20dB. Hence, the radio coverage can be extended to a greater extent herein than the case where the nondirectional antenna is used. For example, in a line-of-sight environment where a propagation loss is considered to be a free-space loss, the transmitter/receiver apparatus 100 with the higher-gain antenna whose gain is 22dBi can extend the radio coverage ten-time longer than the transmitter/receiver apparatus in which the nondirectional antenna is connected to the transceiver 102.

As is known from the above, the two circulators 131 and 132 have the transmitting signal go through the passage constituted by the common path 106, the transmitting signal only-path 107, and the common path 109, and also have the received signal go through the passage constituted by the common path 109, the received signal only-path 108, and the common path 106. Furthermore, the attenuator, the attenuation in which corresponds to the gain of the transmitting/receiving antenna 101, is placed on the transmitting signal only-path 107 so as to settle the output value of the transmitting signal to be outputted from the transmitting/receiving antenna within the regulated level. In this manner, there is no more need to change the design of the transceiver 102. Furthermore, if the antenna used as the transmitting/receiving antenna 101 has a higher gain than the one initially planned to use with the transceiver 102, the radio coverage can be extended.

Note that, the transmitting/receiving antenna 101 is not limited to be a single piece, and may be an antenna system in which a plurality of antennas are placed in parallel so as to increase a directivity thereof.

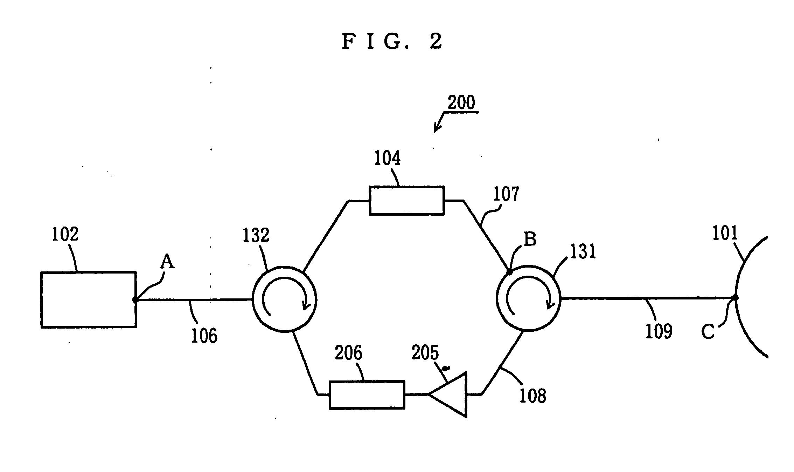

FIG. 2 is a block diagram showing the structure of a transmitter/receiver apparatus with an antenna for use of both signal transmission and reception according to a second example. In FIG. 2, a transmitter/receiver apparatus 200 includes the transceiver 102, the circulators 131 and 132, the attenuator 104, a band-pass filter 206, a low-noise amplifier 205, the transmitting/receiving antenna 101, the common path 106, the transmitting signal only-path 107, the received signal only-path 108, and the common path 109. The transmitter/receiver apparatus 200 is different from the transmitter/receiver apparatus 100 in including the low-noise amplifier 205 and the band-pass filter 206 on the received signal only-path 108. Note that the constituents appeared in the first example are under the same reference numerals herein, and are not further described. Also, the passage for the transmitting signals is not further described as is identical to the one in the first example. It is herein described how the transmitter/receiver apparatus 200 is operated to receive signals. For convenience, the specific values exemplarily provided to each device in the transmitter/receiver apparatus 100 are mentioned herein again. The transceiver 102 is initially designed to go with a nondirectional antenna with a gain of 0dBi and a transmission output of +20dBm; a transmission loss to be suffered in the passage from the transceiver 102 to the transmitting/receiving antenna 101 through the transmitting signal only-path 107 is 2dB (an attenuation in the attenuator 104 is not included); a transmission loss in the passage from the transmitting/receiving antenna 101 to the transceiver 102 through the received signal only-path 108 is also 2dB; the transmitting/receiving antenna 101 is of a directional type with a gain of 22dBi; and the attenuation in the attenuator 104 is 20dB. Note that, these values are always applicable in this example unless otherwise specified.

It is described next below how the transmitter/receiver apparatus 200 is operated to receive signals by referring to FIG. 2. A received signal received by the transmitting/receiving antenna 101 heads for the low-noise amplifier 205 first through the common path 109, then through the received signal only-path 108 via the circulator 131. The received signal reached the low-noise amplifier 205 is amplified therein. Thereafter, the amplified received signal goes through the band-pass filter 206 whereby undesired frequency components included in the signal received by transmitting/receiving antenna 101 are eliminated, and then heads for the transceiver 102 through the common path 106 via the circulator 132. Since the received signal is amplified in the low-noise amplifier 205, the transmitter/receiver apparatus 200 can reduce a noise figure at the feeding terminal of the transmitting/receiving antenna 101 (hereinafter, referred to as total NF at the time of reception) better than the transmitter/receiver apparatus 100. In this manner, it is known that the transmitter/receiver apparatus 200 in FIG. 2 has the better-sensitivity at the feeding terminal of the transmitting/receiving antenna to signal reception than the transmitter/receiver apparatus 100. Therefore, the transmitter/receiver apparatus 200 can extend the radio coverage to a greater extent than the transmitter/receiver apparatus 100 even if the transmitting/receiving antenna 101 used therein is equal in gain to the one used in the transmitter/receiver apparatus 100. To avoid prolixity, the common path 106, the transmitting signal only-path 107, the received signal only-path 108, and the common path 109, all of which indicate the passage for the transmitting/received signals, are not hereinafter mentioned.

It is now described with specific values to which extent the transmitter/receiver apparatus 200 can extend the radio coverage. When, presumably, a gain of the low-noise amplifier 205 is 20dB; a noise figure (hereinafter, simply referred to as NF) is 1dB; a transmission loss in the band-pass filter 206 is 1dB; a transmission loss from the output terminal of the low-noise amplifier 205 to the transceiver 102 is 2dB (the transmission loss in the band-pass filter 206 is included) ; and an NF of the transceiver 102 in use is 13dB, the total NF at the time of reception of the transmitter/receiver apparatus 200 is 3dB. If the NF of the transceiver 102 in use in the transmitter/receiver apparatus 100 is presumably 13dB, a total NF at the time of reception thereof will be 15dB. This teaches that the transmitter/receiver apparatus 200 sees improvement in sensitivity to signal reception by 12 dB compared to the transmitter/receiver apparatus 100. Therefore, the transmitter/receiver apparatus 200 can extend the radio coverage to a greater extent than the transmitter/receiver apparatus 100 if the transmitting/receiving antenna used therein is equal in gain to the one in the transmitter/receiver apparatus 100. For example, in a line-of-sight environment where a propagation loss is considered to be a free-space loss, the transmitter/receiver apparatus 200 can extend the radio coverage four-time longer than the transmitter/receiver apparatus 100. If the same-length radio coverage is expected by using the transmitter/receiver apparatus 100, there is no choice but to put the gain of the transmitting/receiving antenna higher as much as the improved sensitivity to signal reception as described in the foregoing, in this case, 34dBi. In this case, however, the antenna is required to be mounted in the direction precisely matching to the direction thereof due to the antenna's increased directivity caused by the higher gain. Therefore, to extend the radio coverage, the lower gain of the antenna is the better for antenna placement. As is understood from the above, the transmitter/receiver apparatus 200 can advantageously extend the radio coverage to the same extent as the transmitter/receiver apparatus 100 even if the antenna used therein is lower in gain than the one in the transmitter/receiver apparatus 100.

In the time-division radio communication system where signals are transmitted/received under the same frequency, it is assumed that the transmitter/receiver apparatus 200 is in use. In this case, the transmitting signal outputted from the RF input-output terminal of the transceiver 102 and the received signal partially reflected off the RF input-output terminal of the transceiver 102 are partially reflected off the feeding terminal of the transmitting/receiving antenna 101 (hereinafter, referred to as reflection component) or leaked out of the circulator 131 in the unwanted direction, that is the direction of the received signal only-path (hereinafter, referred to as leakage component). Such reflection components and leakage components are first amplified in the low-noise amplifier 205, and then return to the RF input-output terminal of the transceiver 102. Accordingly, if the gain of the low-noise amplifier 205 is too high, the aforementioned components returning to the RF input-output terminal of the transceiver 102 (hereinafter, referred to as return components, where return components of the transmitting signal are transmitting return components and return components of the received signal are receiving return components) may oscillate, or may adversely affect the transceiver 102 during signal transmission and reception. The attenuator 104, however, attenuates not only the transmitting signal to a regulated level corresponding to the gain of the antenna but the return components. Therefore, by using the low-noise amplifier 205 whose gain is appropriately adjusted in accordance with the attenuation in the attenuator 104 and the characteristics of the transceiver 102, the return components can be prevented from adversely affecting the transceiver during signal transmission and reception. It will be described in more detail with specific values by referring to FIG. 2. In FIG. 2, a dot A denotes the RF input-output terminal of the transceiver 102, a dot B denotes a point where the attenuator 104 and the circulator 131 are connected, and a dot C denotes the feeding terminal of the transmitting/receiving antenna 101.

During signal transmission, it is assumed that a transmission loss from the point where the attenuator 104 and the circulator 131 are connected (dot B) to the dot C is set to be 1dB, and the circulator 131 whose loss in the unwanted direction is 18dB and the transmitting/receiving antenna 101 whose feeding terminal (dot C) has reflection property of VSWR 1.5 (return loss 14dB) are selected. In this case, as to the transmitting signal outputted from the dot A, the level of the reflection component returning to the dot A is +2dBm, and the level of the leakage component returning to the dot A is -1dBm. Therefore, the total level of the components returning to the transceiver 102 is +4dBm, at most. From the gain and the attenuation in the aforementioned circuit devices, it is known that an attenuation of the return components (return loss when a line of sight is from the dot A to the dot C) with respect to the transmission output of the transceiver 102 (+20dBm) is about 16dB. This value is close to the return loss of the transmitting/receiving antenna 101, 14dB. As is known from this, despite the 20dB-gain low-noise amplifier 205 placed on the received signal only-path 108, the transmitter/receiver apparatus 200 can retain the transmitting signal returning to the dot A to the same level as the case where the transmitting/receiving antenna 101 is directly connected to the transceiver 102. Accordingly, the transmitter/receiver apparatus 200 can successfully avoid any bad influence on the transceiver 102 during signal transmission to be caused by the components of the transmitting signal reflected off the dot C or leaked out of the circulator 131.

During signal reception, the received signal partially reflected off the RF input-output terminal of the transceiver 102 (dot A) goes around the same passage for the aforementioned components of the transmitting signal, and then returns to the dot A. These return components may cause cochannel interference to transceiver 102. However, as is the case where the aforementioned components of the transmitting signal return to the transceiver 102, by using the low-noise amplifier 205 whose gain is appropriately adjusted in accordance with the attenuation in the attenuator 104 and the characteristics of the transceiver 102, the level of the components of the received signal returning to the dot A can be suppressed to the level equal to or lower than the one necessary to retain the initially-intended quality for signal reception. As described in the foregoing, as to the signal outputted from the transceiver 102, the attenuation of the component returning thereto is about 16dB. Therefore, no matter how the reflection property of the transceiver 102 (VSWR) is poor, a ratio (C/I ratio) between the first-entering received signal and the return components to the transceiver 102 is always 16dB or more. In this manner, despite the 20dB-gain low-noise amplifier 205 placed on the received signal only-path, the transmitter/receiver apparatus 200 can retain the C/I ratio to the same level as the case where the transmitting/receiving antenna 101 is directly connected to the transceiver 102. Accordingly, the transmitter/receiver apparatus 200 can successfully avoid any bad influence on the transceiver during reception to be caused by the component of the received signal returning to the dot A.

Note that, the specific values in the foregoing are considered attainable in view of the specifications of the circulators and antennas on the market. In the foregoing, for the purpose of giving a better idea how the transceiver can stay away from the bad influence during signal transmission and reception to be caused by the components returning to the dot A, the gain of the low-noise amplifier 205 is specified in such a manner that the return components in a case with the transmitter/receiver apparatus 200 and a case where the transmitting/receiving antenna 101 is directly connected to the transceiver 102 are in the same level. If characteristically possible for the transceiver, it certainly is possible to use the low-noise amplifier 205 having such gain that the level of the return components becomes higher in the former case than the latter. As an example, in view of the characteristics of the transceiver 102, it is assumed that the transmitting return components in the level lower than or equal to +6dBm does not adversely affect the transceiver during signal transmission, and the C/I ratio being lower than or equal to 12dB can assure the initially-planned quality for signal reception. In this example, a low-noise amplifier whose gain is higher than the aforementioned value by 2dB (equal to or lower than 22dB) is possibly used as the low-noise amplifier 205 not to adversely affect the transceiver during signal transmission. Further, in order to assure the initially-planned quality for reception, a low-noise amplifier whose gain is 24dB or lower may be used. That is, a low-noise amplifier having a gain of 22dB or lower satisfies the aforementioned conditions for both signal transmission and reception.

Furthermore, if the transmitter/receiver apparatus 200 is used in the radio communication system where signals are transmitted/received under different frequency bands, the band-pass filter 206 having such characteristics that cut off the transmitting signal may be used. In that case, the transmitting return components can be attenuated to such level that causes no influence on signal transmission and reception. The gain of the low-noise amplifier 205 is thus determined as long as the C/I ratio assures the initially-planned quality for reception whichever the level of the transmitting signal is. Therefore, the gain of the low-noise amplifier 205 can be determined in a more flexible manner than the case where signals are transmitted/received under the same frequency. When the transmitting return components in the level lower than or equal to +6dBm does not adversely affect the transceiver during signal transmission, and the C/I ratio being lower than or equal to 12dB can assure the initially-planned quality for signal reception as in the foregoing, the low-noise amplifier having a gain of 24dB or lower satisfies the condition for C/I ratio, and the transmitting return components is cut off by the band-pass filter 206 and the level thereof will be +6dBm or lower. Therefore, the low-noise amplifier having a gain of 24dB or lower can satisfy the aforementioned conditions for signal transmission and reception.

In this example, the band-pass filter 206 is placed in the subsequent stage to the low-noise amplifier 205 so as to reduce an insertion loss sufferable in the preceding stage to the low-noise amplifier 205 and to improve the sensitivity to signal reception, but is not restrictive. When improvement of the sensitivity is not expected that much to extend the radio coverage to a certain degree, the band-pass filter 206 may be placed in the preceding stage to the low-noise amplifier 205. In a case where the gain of the low-noise amplifier 205 is previously regulated, and where the attenuation in the attenuator 104 is not enough due to the change made to the transmitting/receiving antenna 101, another attenuator may be additionally provided in the subsequent stage to the band-pass filter 206. Furthermore, signals are transmitted/received in an alternate manner in this example, but is not restrictive. When the transceiver 102 is designed to transmit/receive signals at the same time, the transmitter/receiver apparatus 200 can be operated to simultaneously transmit/receive signals.

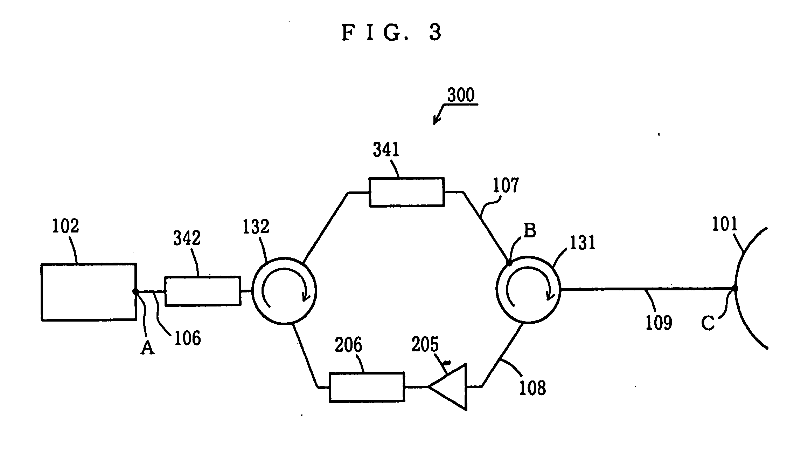

FIG. 3 is a block diagram showing the structure of a transmitter/receiver apparatus with an antenna for use of both signal transmission and reception according to the present invention. In FIG. 3, a transmitter/receiver apparatus 300 of the invention is provided with the transceiver 102, the circulators 131 and 132, attenuators 341 and 342, the band-pass filter 206, the low-noise amplifier 205, the transmitting/receiving antenna 101, the common path 106, the transmitting signal only-path 107, the received signal only-path 108, and the common path 109. The transmitter/receiver apparatus 300 is different from the transmitter/receiver apparatus 200 in FIG. 2 in including the attenuator 341 instead of the attenuator 104, and additionally including the attenuator 342. Note that the constituents appeared in the second example are under the same reference numerals herein, and are not further described. For the sake of clarity, the transmitter/receiver apparatus 300 is described while mentioning the transmitter/receiver apparatuses 100 and 200 described in the first and second examples by way of comparison. To avoid prolixity, the common path 106, the transmitting signal only-path 107, the received signal only-path 108, and the common path 109, all of which indicate the passage for the transmitting/received signals, are not hereinafter mentioned as were not in the second example.

When transmitting signals, the transmitter/receiver apparatus 300 attenuates the transmitting signal outputted from the transceiver 102 in the attenuators 342 and 341, and thus can output the transmitting signal from the transmitting/receiving antenna 101 in the level applicable to the regulated EIRP, for example. Moreover, unlike the transmitter/receiver apparatus 200, the transmitter/receiver apparatus 300 can attenuate undesired components, that is the component returning to the transceiver 102 during signal transmission and reception in the attenuator 342.

In the transmitter/receiver apparatus 200, the attenuation in the attenuator 104 is determined according to the gain of the transmitting/receiving antenna 101. The gain of the low-noise amplifier 205 thus is required to be appropriately determined according to the attenuation in the attenuator 104 and the characteristics of the transceiver 102. It means, for example, whenever the transmitting/receiving antenna 101 is changed into the one having a smaller gain, the attenuator 104 needs to be changed into the one having a lower attenuation, and thereafter the gain of the low-noise amplifier 205 needs to be also changed. On the other hand, as being provided with the attenuators 341 and 342, the transmitter/receiver apparatus 300 can attenuate not only the signals transmitted by the transceiver 102 but undesired components returning to the transceiver 102 such as the reflection component and leakage component. Therefore, there is no more need to limit the low-noise amplifier 205 to have a gain determined relatively to the attenuation in the attenuator 341. Accordingly, the transmitter/receiver apparatus 300 allows more flexible selection for the low-noise amplifier. Further, as is the case with the transmitter/receiver apparatus 200, the transmitter/receiver apparatus 300 can extend the radio coverage to the same extent as in the first example even if the transmitting/receiving antenna used therein is lower in gain than the one in the transmitter/receiver apparatus 100.

Next, it is described how the radio coverage is extended and how the output of the transmitting signal is suppressed by providing a specific value to each device. In FIG. 3, the dot *A* denotes the RF input-output terminal of the transceiver 102, the dot *B* denotes the point where the attenuator 104 and the circulator 131 are connected, and the dot *C* denotes the feeding terminal of the transmitting/receiving antenna 101. It is assumed herein that a gain of the low-noise amplifier is 20dB and an NF thereof is 1dB; a transmission loss in the band-pass filter 206 is 1dB; an NF of the transceiver 102 is 13dB; a transmission loss from the feeding terminal of the transmitting/receiving antenna 101 (dot *C*) to the low-noise amplifier 205 is 1dB; and a transmission loss from the low-noise amplifier 205 to the RF input-output terminal of the transceiver 102 (dot *A*) is 2dB (the transmission loss in the band-pass filter 206 is included but not the attenuation in the attenuator 342). If the attenuation in the attenuator 342 is presumably 9dB, the total NF at the time of reception of the transmitter/receiver apparatus 300 in this case is 7dB. It means, the transmitter/receiver apparatus 300 sees improvement in sensitivity to signal reception by 8dB compared to the transmitter/receiver apparatus 100. Therefore, the transmitter/receiver apparatus 300 using an antenna having a gain of 14dBi as the transmitting/receiving antenna 101 can extend radio coverage to the same extent as the transmitter/receiver apparatus 100 using an antenna having a gain of 22dBi as the transmitting/receiving antenna 101. When, presumably, the transceiver 102 equipped with the transmitter/receiver apparatus 300 is designed to go with a nondirectional antenna having a gain of 0dBi and a transmission output of +20dBm, and a transmission loss in the passage from the dot *A* to the dot *C* (the attenuation in the attenuators 342 and 341 are not included) is 2dB, the transmission output from the transmitting/receiving antenna 101 is at the level applicable to the regulated EIRP (+10dB or higher, and +20dB or lower) shown in the first example by setting the attenuation in the attenuator 341 to be 3dB.

Next, it is described, in the time-division radio communication system where signals are transmitted/received under the same frequency, how the transmitting return components and the receiving return components are attenuated in the transmitter/receiver apparatus 300. The specific values provided to each device are also applicable to this example. In this example, as is known from FIG. 3, the transmitting return components or the receiving return components goes through the attenuator 342 for twice and the attenuator 341 for once. Thus, the attenuation of the transmitting return components or the receiving return components in the attenuators 342 and 341 is 21dB, and thus is higher than the attenuation in the attenuator 104 in the transmitter/receiver apparatus 200. In this manner, if the loss in the unwanted direction of the circulator 131, reflection property of the transmitting/receiving antenna 101, and the transmission loss on the transmission path between the transceiver 102 and the transmitting/receiving antenna 101 (the attenuators 341 and 342 are not included) are in the same values for those of the transmitter/receiver apparatus 200, the levels of the transmitting return components and the receiving return components in the transmitter/receiver apparatus 300 are both to be suppressed better than in the transmitter/receiver apparatus 200. In this manner, the transmitter/receiver apparatus 300 is thus capable of suppressing the bad influence on signal transmission and reception of the transceiver 102 to be caused by the transmitting return components and the receiving return components as is the case with the transmitter/receiver apparatus 200. Note that, the number and location of the attenuator (s) in the transmitter/receiver apparatus 300 are not limited to the example shown in FIG. 3 as long as the transmitting return components and the receiving return components in the foregoing can be effectively attenuated. For the purpose of component sharing, when every low-noise amplifier 205 is equal in gain no matter what the gain of the transmitting/receiving antenna is, for example, another attenuator can be placed between an output terminal of the low-noise amplifier 205 and the attenuator 342.

If the signals are expected to be transmitted by using the transmitter/receiver apparatus 300 in the radio communication system where signals are transmitted/received under different frequency bands, the band-pass filter 206 having such characteristics that cut off the transmitting signal may be used. In this manner, the transmitting return components returning to the transceiver 102 are attenuated to such level that causes no influence on signal transmission and reception. The gain of the low-noise amplifier 205 can be thus determined as long as the C/I ratio assures the initially-planned quality for signal reception no matter in what level the transmitting signal is. Therefore, the gain of the low-noise amplifier 205 can be determined in a more flexible manner than the case where signals are transmitted/received under the same frequency.

As is understood from the above, the transmitter/receiver apparatus 300 has an advantage over the transmitter/receiver apparatus 200 in allowing more flexible selection for the low-noise amplifier 205 regardless of the attenuation in the attenuator 341.

In this embodiment, the band-pass filter 206 is placed in the subsequent stage to the low-noise amplifier 205 so as to reduce an insertion loss sufferable in the preceding stage to the low-noise amplifier 205 and to improve the sensitivity to signal reception, but is not restrictive. When improvement of the sensitivity is not expected that much to extend the radio coverage to a certain degree, the band-pass filter 206 may be placed in the preceding stage to the low-noise amplifier 205. In a case where the gain of the low-noise amplifier 205 is previously regulated, and where the attenuation in the attenuators 341 and 342 are not enough due to the change made to the transmitting/receiving antenna 101, another attenuator may be additionally provided in the subsequent stage to the band-pass filter 206. Furthermore, signals are transmitted/received in an alternate manner in this embodiment, but is not restrictive. When the transceiver 102 is designed to transmit/receive signals at the same time, the transmitter/receiver apparatus 300 can be operated to simultaneously transmit/receive signals.

While the invention has been described in detail, the foregoing description is in all aspects illustrative and not restrictive. It is understood that numerous other modifications and variations can be devised without departing from the scope of the invention.

## Claims

1. A transmitter/receiver apparatus with an antenna for use of both signal transmission and reception, comprising:
a transceiver (102)whose transmission output level is unchangeably fixed so as to satisfy, with respect to a predetermined antenna gain, a predetermined output level defined by a predetermined standard, producing and outputting a transmitting signal, and receiving and processing a received signal;
an antenna (101) radiating said transmitting signal outputted from said transceiver (102) into the air, and receiving a signal propagating through the air and then outputting the signal as said received signal; and
transmission path forming means for forming a transmission path for having said transmitting signal and said received signal to transmit from/to said transceiver (102) to/from said antenna (101), wherein
said transmission path forming means comprises:
a first common transmission path (106), and end thereof being connected to said transceiver;
a second common transmission path (109), an end thereof being connected to said antenna;
a first transmission path (107) interposed between the other end of said first common transmission path (106) and the other end of said second common transmission path (109);
a second transmission path (108) interposed between the other end of said first common transmission path (106) and the other end of said second common transmission path (109), and provided in parallel with said first transmission path (107) ;
a first circulator (132) placed among the other end of said first common transmission path (106) and the respective other ends of said first and second transmission paths (107, 108), which outputs said transmitting signal inputted from said first common transmission path (106) to said first transmission path (107) and outputs said received signal inputted from said second transmission path (108) to said first common transmission path (106);
a second circulator (131) placed among the other end of said second common transmission path (109) and the respective other ends of said first and second transmission paths (107, 108), which outputs said received signal inputted from said second common transmission path (109) to said second transmission path (108) and outputs said transmitting signal inputted from said first transmission path (107) to said second common transmission path (109);
a first attenuator (341) placed on said first transmission path (107) for attenuating said transmitting signal going therethrough,
amplifying means (205) placed on said second transmission path (108) for amplifying said received signal; and
a second attenuator (342) placed on said first common transmission path (106) for attenuating said transmitting signal and said received signal going therethrough, wherein
a gain of said antenna (101) is increased so as to become higher than said predetermined antenna gain,
an attenuation in said first attenuator (341) and an attenuation in said second attenuator (342) are adjusted according to an increase in the gain of said antenna (101), whereby an output value of said transmitting signal supplied to said antenna (101) is regulated to said predetermined output level, and
a gain of said amplifying means (205) is previously adjusted according to the attenuation in said second attenuator (342), thereby suppressing an influence on said transceiver (102) during signal transmission and reception caused by said transmitting signal and said received signal reflected off a feeding terminal of said antenna (101) and leaked out of said second circulator (131), such that a communication area is extended.

## Patentansprüche

1. Sende-/Empfangsvorrichtung mit einer Antenne zur Verwendung sowohl zur Signalübertragung als auch zum -empfang, umfassend:
einen Transceiver (102), dessen Übertragungsausgangspegel unveränderbar fest ist, um in Bezug auf eine vorbestimmte Antennenverstärkung einen vorbestimmten Ausgangspegel zu erfüllen, der durch einen vorbestimmten Standard definiert ist, der ein Übertragungssignal generiert und ausgibt und der ein empfangenes Signal empfängt und verarbeitet;
eine Antenne (101), die das Übertragungssignal, das vom Transceiver (102) ausgegeben wird, in den Äther abstrahlt, und die ein Signal empfängt, das sich durch den Äther ausbreitet und dann das Signal als das empfangene Signal ausgibt; und
Übertragungspfadbildemittel zum Herstellen eines Übertragungspfads, um das Übertragungssignal und das empfangene Signal vom/zum Transceiver (102) zur/von der Antenne (101) übertragen zu haben, wobei die Übertragungspfadbildemittel umfassen:
einen ersten gemeinsamen Übertragungspfad (106), von dem ein Ende mit dem Transceiver verbunden ist;
einen zweiten gemeinsamen Übertragungspfad (109), von dem ein Ende mit der Antenne verbunden ist;
einen ersten Übertragungspfad (107), der zwischen das andere Ende des ersten gemeinsamen Übertragungspfads (106) und das andere Ende des zweiten gemeinsamen Übertragungspfads (109) gesetzt ist;
einen zweiten Übertragungspfad (108), der zwischen das andere Ende des ersten gemeinsamen Übertragungspfads (106) und das andere Ende des zweiten gemeinsamen Übertragungspfads (109) gesetzt ist und parallel zum ersten Übertragungspfad (107) zur Verfügung gestellt ist;
einen ersten Zirkulator (132), der zwischen dem anderen Ende des ersten gemeinsamen Übertragungspfads (106) und dem jeweiligen anderen Ende des ersten und zweiten Übertragungspfads (107, 108) angeordnet ist, der das Übertragungssignal ausgibt, das vom ersten gemeinsamen Übertragungspfad (106) in den ersten Übertragungspfad (107) eingegeben wird und das empfangene Signal an den ersten gemeinsamen Übertragungspfad (106) ausgibt, das vom zweiten Übertragungspfad (108) eingegeben wird;
einen zweiten Zirkulator (131), der zwischen dem anderen Ende des zweiten gemeinsamen Übertragungspfads (109) und den jeweils anderen Enden des ersten und zweiten Übertragungspfads (107, 108) angeordnet ist, der das empfangene Signal ausgibt, das vom zweiten gemeinsamen Übertragungspfad (109) in den zweiten Übertragungspfad (108) eingegeben wird und das Übertragungssignal an den zweiten gemeinsamen Übertragungspfad (109) ausgibt, das vom ersten Übertragungspfad (107) eingegeben wird;
einen ersten Dämpfer (341), der auf dem ersten Übertragungspfad (107) angeordnet ist, um das Übertragungssignal zu dämpfen, das durch ihn durchgeht,
Verstärkungsmittel (205), die auf dem zweiten Übertragungspfad (108) angeordnet sind, um das empfangene Signal zu verstärken; und
einen zweiten Dämpfer (342), der auf dem ersten gemeinsamen Übertragungspfad (106) angeordnet ist, um das Übertragungssignal und das empfangene Signal zu dämpfen, die durch ihn durchgehen, wobei
eine Verstärkung der Antenne (101) so erhöht wird, dass sie höher als die vorbestimmte Antennenverstärkung wird,
eine Dämpfung im ersten Dämpfer (341) und eine Dämpfung im zweiten Dämpfer (342) gemäß einer Erhöhung in der Verstärkung der Antenne (101) eingestellt werden, wobei ein Ausgabewert des Übertragungssignals, das an die Antenne (101) geliefert wird, auf den vorbestimmten Ausgangspegel reguliert wird, und
eine Verstärkung des Verstärkungsmittels (205) im Voraus gemäß der Dämpfung im zweiten Dämpfer (342) eingestellt ist, wobei ein Einfluss auf den Transceiver (102) während der Signalübertragung und des -empfangs unterdrückt wird, der durch das Übertragungssignal und das empfangene Signal verursacht wird, die von einem Speiseanschluss der Antenne (101) reflektiert werden und vom zweiten Zirkulator (131) entweichen, so dass ein Kommunikationsgebiet erweitert wird.

## Revendications

1. Appareil émetteur/récepteur avec une antenne pour une utilisation à la fois de transmission et de réception de signaux, comprenant :
un émetteur-récepteur (102), dont le niveau de sortie de transmission est fixé de manière immuable de sorte à répondre, par rapport à un gain d'antenne prédéterminé, à un niveau de sortie prédéterminé défini par un standard prédéterminé, produisant et délivrant un signal de transmission et recevant et produisant un signal reçu ;
une antenne (101) émettant ledit signal de transmission délivré dudit émetteur-récepteur (102) dans l'air et recevant un signal se propageant à travers l'air et, ensuite, délivrant le signal comme étant ledit signal reçu ; et
un moyen de formation de trajet de transmission pour former un trajet de transmission pour avoir que ledit signal de transmission et ledit signal reçu soient transmis dudit/au dit émetteur-récepteur (102) à/de ladite antenne (101), dans lequel
ledit moyen de formation de trajet de transmission comprend :
un premier trajet de transmission commun (106) et le bout de celui-là étant raccordé au dit émetteur-récepteur ;
un second trajet de transmission commun (109), un bout de celui-là étant raccordé à ladite antenne ;
un premier trajet de transmission (107) interposé entre l'autre bout dudit premier trajet de transmission commun (106) et l'autre bout dudit second trajet de transmission commun (109) ;
un second trajet de transmission (108) interposé entre l'autre bout dudit premier trajet de transmission commun (106) et l'autre bout dudit second trajet de transmission commun (109) ; et prévu en parallèle avec ledit premier trajet de transmission (107) ;
un premier circulateur (132) placé entre l'autre bout dudit premier trajet de transmission commun (106) et les autres bouts respectifs desdits premier et second trajets de transmission (107, 108), qui délivre ledit signal de transmission entré provenant dudit premier trajet de transmission commun (106) au dit premier trajet de transmission (107) et qui délivre ledit signal reçu entré provenant dudit second trajet de transmission (108) au dit premier trajet de transmission commun (106) ;
un second circulateur (131) placé entre l'autre bout dudit second trajet de transmission commun (109) et les autres bouts respectifs desdits premier et second trajets de transmission (107, 108), qui délivre ledit signal reçu entré provenant dudit second trajet de transmission commun (109) au dit second trajet de transmission (108) et qui délivre ledit signal de transmission entré provenant dudit premier et trajet de transmission (107) au dit second trajet de transmission commun (109) ;
un premier atténuateur (341) placé sur ledit premier trajet de transmission (107) pour atténuer ledit signal de transmission qui le traverse,
un moyen d'amplification (205) placé sur ledit second trajet de transmission (108) pour amplifier ledit signal reçu ; et
un second atténuateur (342) placé sur ledit premier trajet de transmission commun (106) pour atténuer ledit signal de transmission et ledit signal reçu qui le traversent, dans lequel
un gain de ladite antenne (101) est accru de sorte à devenir plus élevé que ledit gain d'antenne prédéterminé,
une atténuation dans ledit premier atténuateur (341) et une atténuation dans ledit second atténuateur (342) sont ajustées selon une augmentation du gain de ladite antenne (101) de sorte qu'une valeur de sortie dudit signal de transmission fourni à ladite antenne (101) est réglée au dit niveau de sortie prédéterminé, et
un gain dudit moyen d'amplification (105) est auparavant ajusté selon l'atténuation dans ledit second atténuateur (342), supprimant, de ce fait, une influence sur ledit émetteur-récepteur (102) pendant une transmission et une réception de signaux provoquée par ledit signal de transmission et par ledit signal reçu renvoyés d'une borne d'alimentation de ladite antenne (101) et échappés dudit second circulateur (131) de telle sorte qu'une zone de communication est étendue.
